# EUROPÄISCHE PATENTSCHRIFT

(11) **EP 1 858 305 B1**
(45) Veröffentlichungstag und Bekanntmachung des Hinweises auf die Patenterteilung: **29.12.2010**
(21) Anmeldenummer: 07106056.0
(22) Anmeldetag: 12.04.2007
(51) Int. Cl.: H05B 41/288

(54) **Schaltungsanordnung für einen Kraftfahrzeugscheinwerfer mit einer Gasentladungslampe**
Switching assembly for a motor vehicle headlamp with a gas discharge lamp
Circuit pour un phare de véhicule automobile doté d'une lampe à décharge

(30) Priorität: 18.05.2006 DE 102006023224
(43) Veröffentlichungstag der Anmeldung: 21.11.2007
(73) Patentinhaber: Hella KGaA Hueck & Co., 59552 Lippstadt (DE)
(72) Erfinder: Daub, Wolfgang, 59609 Anröchte (DE)

(56) Entgegenhaltungen:
- JP-A- 2003 031 395
- US-A1- 2003 076 053
- US-A1- 2003 111 969

## Beschreibung

### STAND DER TECHNIK

Die Erfindung betrifft eine Schaltungsanordnung für einen Kraftfahrzeugscheinwerfer mit einer Gasentladungslampe.

Aus dem Stand der Technik sind gattungsgemäße Schaltungsanordnungen für einen Kraftfahrzeugscheinwerfer bekannt, die einen Eingang zum Anschließen der Schaltungsanordnung an ein Kraftfahrzeugbordnetz, einen Ausgang zum Anschließen einer Gasentladungslampe und einen Gleichstromwandler aufweisen, wobei der Gleichstromwandler zwischen den Ausgang und den Eingang geschaltet ist. Der Gleichstromwandler umfasst einen Eingangskondensator zum Puffern der primärseitigen Spannung. Die Schaltungsanordnung gattungsgemäßer Art umfasst ferner Mittel zum Einstellen eines primärseitigen Stroms durch den Gleichstromwandler. Die Mittel zum Einstellen des primärseitigen Stroms umfassen vorzugsweise ein Element zum Vergleichen einer ersten Spannung mit einer zweiten Spannung. Ferner umfassen die Mittel zum Einstellen des primärseitigen Stroms ein Stellelement zum Einstellen des primärseitigen Stroms in Abhängigkeit des Ergebnisses des Vergleichs durch das Element zum Vergleichen.

Bei den aus dem Stand der Technik bekannten Schaltungsanordnungen ist als erste Spannung eine Spannung an den Komparator angelegt, die ein Maß für den Primärstrom durch den Spannungswandler ist. Dazu weisen die aus dem Stand der Technik bekannten Schaltungsanordnungen Strom-Spannungs-Wandler auf, die den Primärstrom in ein entsprechendes Spannungssignal umwandeln. Ferner liegt am Komparator als zweite Spannung ein Spannungssignal an, welches einen maximalen Primärstrom vorgibt, der erreicht werden soll. Dieser maximale Primärstrom wird durch einen externen Regler vorgegeben und bildet gewissermaßen eine Führungsgröße zur Regelung des Primärstroms.

Sowohl beim Einschalten der Gasentladungslampe als auch bei dem Aufladen einer Boosterschaltung, die dem Spannungswandler nachgeschaltet ist, kann es zu einem Schwingen der Schaltungsanordnung kommen. Dieses Schwingen kann sich am Ausgang der Schaltungsanordnung durch ein Schwingen der Ausgangsleistung bemerkbar machen. Um diesen Schwingungen der Ausgangsleistung abzuhelfen wurden in der Vergangenheit als Eingangskondensatoren Kondensatorbauelemente mit großen Kapazitäten verwendet. Auch durch eine hinreichend große Dimensionierung der Bauelemente der Boosterschaltung konnte ein Schwingen der Ausgangsleistung verhindert werden. Die große Dimensionierung der Bauelemente hat jedoch den Nachteil, dass dieses in der Regel kostenträchtig ist.

Aus dem *Patent Abstract of Japan* JP 2003031395 ist eine Schaltungsanordnung für eine Gasentladungslampe bekannt, bei der Änderungen der Eingangsspannung kompensiert werden. Damit werden auch Schwankungen der Spannung über den Eingangskondensator kompensiert, da die Eingangsspannung der Kondensatorspannung entspricht. Durch die Kompensation kann ein Schwingen der Ausgangsleistung verhindert werden. Es hat sich gezeigt, dass die Schwankungen der Eingangsspannung ursächlich für die Schwingungen der Ausgangsleistung sind. Über den geregelten Primärstrom besteht eine Wechselwirkung mit der Spannung über dem Eingangskondensator. Durch eine Kompensation der Schwankungen der Spannung über dem Eingangskondensator kann ein Schwingen der Ausgangsleistung verhindert werden. Dem Dokument JP 2003031395 können allerdings keine Einzelheiten entnommen werden, wie Mittel zum Kompensieren der Spannungsschwankungen im Einzelnen ausgebildet sind.

### VORTEILE DER ERFINDUNG

Der Erfindung liegt vor dem Hintergrund der Nachteil des Standes der Technik die Aufgabe zugrunde, eine weitere Schaltungsanordnung vorzuschlagen, bei welcher ein Schwingen der Ausgangsleistung beim Einschalten der Gasentladungslampe oder beim Aufladen der Boosterschaltung verhindert ist.

Dieses wird erfindungsgemäß dadurch erreicht, dass die Mittel zum Kompensieren von Schwankungen der Spannung über dem Eingangskondensator geeignet und eingerichtet sind, entweder die erste Spannung in Abhängigkeit von der Spannung über dem Eingangskondensator und von einer Spannung entsprechend des primärseitigen Stroms oder die zweite Spannung in Abhängigkeit von der Spannung über dem Eingangskondensator und von einer von einem Regler vorgegebenen Spannung entsprechend einem maximalen primärseitigen Strom zu erzeugen.

Sind die Mittel zum Kompensieren geeignet und eingerichtet, die erste Spannung in Abhängigkeit von der Spannung über dem Eingangskondensator und von einer Spannung entsprechend des primärseitigen Stroms zu erzeugen, kann die zweite Spannung gemäß der Erfindung einer von einem Regler vorgegebenen Spannung entsprechen, wobei diese Spannung einem maximalen primärseitigen Strom entspricht. Die von dem Regler vorgegebene Spannung kann bei einer erfindungsgemäßen Schaltungsanordnung durch einen Begrenzer zur Erzeugung der zweiten Spannung auf einen vorgegebenen Grenzwert begrenzt werden.

Gemäß der Erfindung kann die Schaltungsanordnung als Teil der Mittel zum Kompensieren einen Subtrahierer zum Erzeugen der ersten Spannung aufweisen. Der Subtrahierer kann zur Erzeugung der ersten Spannung durch Abziehen der Spannung über dem Eingangskondensator von der Spannung entsprechend des primärseitigen Stroms geeignet und eingerichtet sein.

Sind die Mittel zum Kompensieren geeignet und eingerichtet, die zweite Spannung in Abhängigkeit von der Spannung über dem Eingangskondensator und von einer von einem Regler vorgegebenen Spannung entsprechend einem maximalen primärseitigen Strom zu erzeugen, kann die erste Spannung einem primärseitigen Strom entsprechen. Außerdem kann der Addierer zur Erzeugung der zweiten Spannung zum Addieren der Spannung über dem Eingangskondensator zu der von dem Regler vorgegebenen Spannung eingerichtet und geeignet sein.

Die Schaltungsanordnung kann gemäß der Erfindung ein Bandpassfilter zum Filtern der zu den Mitteln zum Kompensieren zugeführten Spannung über dem Eingangskondensator umfassen. Dadurch können störende Signalanteile in dem Spannungssignal der Spannung über dem Eingangskondensator ausgefiltert werden. Das Bandpassfilter ist vorzugsweise auf eine oder mehrere Resonanzfrequenzen des Bordnetzes und/oder eines Eingangsfilters der Schaltungsanordnung und/oder des Eingangskondensators abgestimmt.

Gemäß der Erfindung können die Mittel zum Kompensieren durch Schaltmittel ein- oder abschaltbar sein, wobei die Schaltmittel einen Komparator und ein Einschaltelement umfassen können. Das Schaltelement ist vorzugsweise durch den Komparator angesteuert. Der Komparator kann zum Vergleichen der von dem Regler vorgegebenen Spannung mit dem Grenzwert für die zweite Spannung geeignet und eingerichtet sein. In Abhängigkeit des Vergleichs des Komparators kann das Schaltmittel zum Einbeziehungsweise Ausschalten der Mittel zum Kompensieren aktivierbar sein. Das Schaltelement zum Einschalten der Mittel zum Kompensieren ist insbesondere dann aktivierbar, wenn die von dem Regler vorgegebenen Spannung 30 % bis 100 %, insbesondere 55 % des Grenzwerts für den maximalen Primärstrom entspricht.

Der Subtrahierer zur Erzeugung der ersten Spannung durch Abziehen der Spannung über dem Eingangskondensator von der Spannung entsprechend des primärseitigen Stroms geeignet und eingerichtet ist, wobei zwischen einem Abgriff der Spannung über dem Eingangskondensator und dem Subtrahierer ein Verstärker geschaltet ist. Alternativ kann zwischen dem Abgriff der Spannung über dem Eingangskondensator und dem Addierer ein Verstärker geschaltet sein.

Der Addierer kann zur Erzeugung der zweiten Spannung durch Addieren der Spannung über dem Eingangskondensator und der vom Regler vorgegebenen Spannung geeignet und eingerichtet sein, wobei zwischen einem Abgriff über dem Eingangskondensator und dem Addierer ein Verstärker geschaltet ist.

Der Verstärker kann gemäß der Erfindung einen variablen Verstärkungsfaktor haben. Eine erfindungsgemäße Schaltungsanordnung kann zum Einstellen des Verstärkungsfaktors ein Mittel zum Einstellen in Abhängigkeit einer Differenz zwischen der von dem Regler vorgegebenen Spannung und dem Grenzwert aufweisen.

### ZEICHNUNGEN

Zwei Ausführungsbeispiele für erfindungsgemäße Schaltungsanordnungen für einen Kraftfahrzeugscheinwerfer mit einer Gasentladungslampe sind anhand der Zeichnung näher beschrieben. Es zeigt
- Fig. 1: das erste Ausführungsbeispiel und
- Fig. 2: das zweite Ausführungsbeispiel.

### BESCHREIBUNG DER AUSFÜHRUNGSBEISPIELE

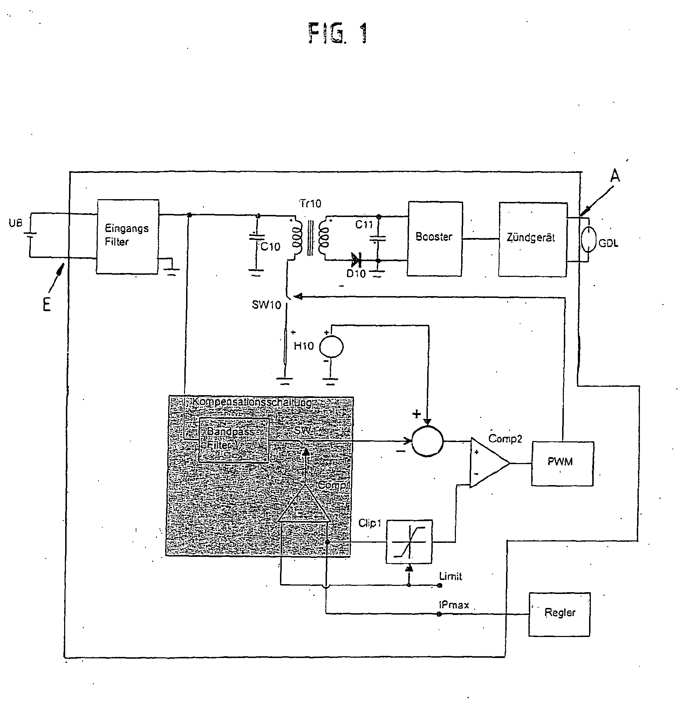

Das in der Fig. 1 dargestellte Ausführungsbeispiel für eine erfindungsgemäße Schaltungsanordnung für einen Kraftfahrzeugscheinwerfer mit einer Gasentladungslampe weist einen Eingang E auf, mit welchem die Schaltungsanordnung an eine Bordnetzspannung UB eines Kraftfahrzeugbordnetzes anschließbar ist. Ferner weist die Schaltungsanordnung einen Ausgang A auf, an welchen die Gasentladungslampe GDL des Kraftfahrzeugscheinwerfers elektrisch angeschlossen werden kann.

Die erfindungsgemäße Schaltungsanordnung umfasst zur elektrischen Energieversorgung der an den Ausgang A anschließbaren Gasentladungslampe GDL einen Gleichstromwandler auf, der unter Zwischenschaltung eines Eingangsfilters an den Eingang E angeschlossen ist. Mittels des Eingangsfilters können störende Signale aus dem Kraftfahrzeugbordnetz ausgefiltert werden. An das Eingangsfilter ist der Gleichstromwandler bestehend aus einem Eingangskondensator C10, einem Sperrtransformator Tr10 und einer Gleichrichterdiode D10 und einem sekundärseitigen Glättungskondensator C11 angeschlossen. Dem Gleichstromwandler ist eine Boosterschaltung und ein Zündgerät nachgeschaltet, die die Sekundärseite des Gleichstromwandlers mit dem Ausgang A für die Gasentladungslampe GDL verbinden. Sowohl das Eingangsfilter, der Gleichstromwandler, die Boosterschaltung und das Zündgerät sind auf herkömmliche Art und Weise ausgebildet.

Im Primärkreis des Sperrtransformators Tr10 ist ein Stromwandlerbauelement angeordnet, welches den Primärstrom durch den Sperrtransformator Tr10 in eine entsprechende Spannung umwandelt. Die Ausgangsspannung des Stromspannungswandlers H10 kann an einem Ausgang des Gleichstromwandlers abgegriffen werden. Ferner umfasst der Gleichstromwandler im Primärkreis einen Schalter SW10, bei dem es sich um einen gesteuerten Schalter handelt. Der Schalter wird zur Erzeugung des Stroms im Sekundärkreis geschlossen oder geöffnet.

Zur Ansteuerung des Schalters SW10 ist ein Pulsweitenmodulator PWM vorgesehen, der von einem Komparator Comp2 angesteuert.

Zur Ansteuerung des Pulsweitenmodulators wird an den positiven Eingang des Komparators der Ausgang des Stromspannungswandlers H10 angelegt. Der negative Eingang des ersten Komparators wird dagegen in der Regel unter Zwischenschaltung eines Begrenzers Clip1 mit einem Regler verbunden, der eine Spannung zur Verfügung stellt, die dem maximalen Strom im Primärkreis des Sperrwandlers entspricht.

Dieser maximale Strom im Primärkreis des Sperrwandlers ist eine Größe, die von dem Regler, der nicht Teil der erfindungsgemäßen Schaltungsanordnung ist, vorgegeben wird. Der maximale Strom im Primärkreis ist eine zeitlich veränderliche Größe, die stets von dem Regler vorgegeben wird. Für die erfindungsgemäße Schaltungsanordnung bildet der maximale Strom durch den Primärkreis beziehungsweise die diesem Strom entsprechende Spannung eine Führungsgröße, die durch den ersten Komparator Comp2 und dem Pulsweitenmodulator PWM sowie dem Schalter SW10 eingestellt wird.

Das Problem der herkömmlichen Schaltungsanordnungen lag darin, dass nach der Zündung der Gasentladungslampe diese mit einem gleichmäßigen hohen Strom in einen stationären Betrieb gebracht werden muss. Das Eingangsfilter der Schaltungsanordnung sowie das Bordnetz selbst enthalten induktive Komponenten. Nach dem Zünden versucht nun die Schaltungsanordnung die Lampe sofort mit einem großen Strom zu versorgen. Die induktiven Komponenten des Eingangsfilters sowie des Bordnetzes wirken jedoch einer schnellen Stromänderung entgegen. Der Wandler kann daher den Strom zunächst nicht aus dem Bordnetz entnehmen. Vielmehr wird die Energie zunächst aus dem Eingangskondensator des Sperrwandlers bezogen. Bei Eingangskondensatoren mit kleineren Kapazitäten bricht die Spannung durch die Entladung des Eingangskondensators häufig recht schnell ein. Der Strom am Ausgang des Gleichstromwandlers kann dadurch nicht aufrecht erhalten bleiben. Er bricht so weit ein, dass die Lampe unter Umständen verlischt und wieder neu gezündet werden muss. (Der Booster hat die Aufgabe mit einem zusätzlichen Strom den Wandler zu unterstützen, damit die Lampe nicht verlischt.) Mit dem Einbrechen der Spannung am Kondensator C10 versucht der Wandler den Eingangsstrom weiter zu erhöhen, um den Ausgangsstrom aufrecht zu erhalten. Die Spannung am C10 bricht wieder ein, im Extremfall bis nahe 0V. Dieses führt im Weiteren dazu, dass der Eingangskondensator weit über seinen Anfangswert aufgeladen wird. Der Sperrwandler reduziert jetzt mit steigender Eingangsspannung die Stromaufnahme (weil der Ausgangsstrom bzw. die Ausgangsleistung konstant sein soll). Der Strom in der Eingangsinduktivität sinkt unter dem Mittelwert und der Schwingvorgang beginnt von vorne. Ohne einen großen Boosterkondensator kann der Ausgangsstrom nicht konstant gehalten werden. (Die Schwingfrequenz ist so hoch, dass man sie nicht im Licht sehen kann, Schwankungen in der Helligkeit sind dennoch möglich, wenn die Lampe beinahe ausgeht.)Außerdem wird das Bordnetz zum Teil erheblich gestört.

In der Vergangenheit wurde dieses Problem durch den Einsatz von hinreichend großen Eingangskondensatoren und hinreichend groß dimensionierten Boosterschaltungen behoben. Schwingungen konnten in der Vergangenheit auch beim Aufladen der Boosterschaltung vor dem Einschalten der Gasentladungslampe GDL auftreten. Zum Verhindern eines Schwingens des Ausgangsstroms und somit der Leistung der Gasentladungslampe weist die erfindungsgemäße Schaltungsanordnung gemäß Fig. 1 Mittel zum Kompensieren der Schwankungen der Spannung über dem Eingangskondensator des Spannungswandlers auf. Sofern Schwankungen der Spannung über dem Eingangskondensator C10 des Spannungswandlers kompensiert sind, sind Leistungsschwankungen der Gasentladungslampe GDL verhindert.

Die Mittel zum Kompensieren der Spannungsschwankungen weisen einen Subtrahierer auf, in dem von der dem Primärstrom entsprechenden Spannung, die am Ausgang des Stromspannungswandlers H10 abgegriffen wird, die Spannung des Eingangskondensators C10 abgezogen wird. Diese Differenz wird dann an den positiven Eingang des Komparators Comp2 angelegt.

Durch das Subtrahieren der Spannungsschwankungen am Eingangskondensator C10 von der zu dem Komparator Comp2 geführten Spannung, die dem Primärstrom durch den Spannungswandler entspricht, wird eine Gegenkopplung der Spannungsschwankungen erreicht und verhindert, dass am Ausgang des Spannungswandlers Leistungsschwankungen auftreten.

Untersuchungen haben gezeigt, dass die Schaltungsanordnung besonders zuverlässig arbeitet, wenn das Spannungssignal, das vom Eingangskondensator C10 zu dem Subtrahierer geführt wird mittels eines Bandpassfilters gefiltert wird. Das Bandpassfilter ist dabei vorzugsweise auf Resonanzfrequenzen des Bordnetzes beziehungsweise des Eingangsfilters abgestimmt.

Es hat sich ferner gezeigt, dass eine Kompensation der Spannungsschwankungen am Eingangskondensator C10 des Spannungswandlers nur dann erwünscht ist, wenn der von dem Regler vorgegebene maximale Primärstrom einen vorbestimmten Grenzwert erreicht oder annähernd erreicht. Aus diesem Grund ist die Erfassung der Spannung über dem Eingangskondensator C10 zu dem Subtrahierer S abschaltbar ausgestaltet. Zum Abschalten der Kompensation, d. h. der Gegenkopplung des Spannungssignals der Spannung sind Schaltmittel vorgesehen, die ein Schaltelement SW1 und einen weiteren Komparator Comp1 umfassen. An dem Komparator Comp1 liegt am positiven Eingang die Spannung an, die vom Regler zur Verfügung gestellt wird und dem maximalen Primärstrom entspricht. Am negativen Eingang des zweiten Komparators Comp1 liegt dagegen ein Spannungssignal an, welches dem Grenzwert für den maximalen Primärstrom entspricht. Der Komparator Comp1 ist so eingerichtet, dass er das Schaltelement SW1 zum Schließen aktiviert, sofern das Spannungssignal des Reglers größer oder gleich dem 0,7-fachen des Grenzwertes entspricht.

Ist diese Bedingung erfüllt, werden Spannungsschwankungen am Eingangskondensator C10 in der beschriebenen Art und Weise von dem Ausgangssignal des Stromspannungswandlers H10 subtrahiert. Sinkt die Spannung am Eingangskondensator mit einer bestimmten Geschwindigkeit, so bildet sich am Ausgang des Bandpasses ein negatives Signal, welches vom Ausgangssignal des Strom-Spannungs-Wandlers H10 subtrahiert, d. h. betragsmäßig addiert wird. Der erste Komparator Comp2 schaltet damit schon bevor der Primärstrom den Grenzwert erreicht hat. Die Schaltung wirkt insgesamt als Gegenkopplung und zwar genau in dem Frequenzbereich, in dem das Eingangsfilter und das Bordnetz seine Eigenresonanzfrequenz hat.

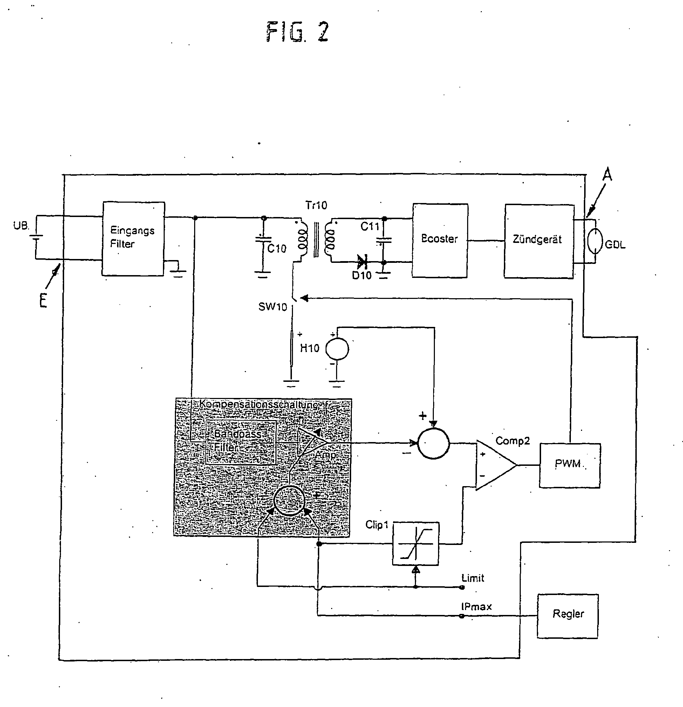

Das in Fig. 2 dargestellte zweite Ausführungsbeispiel für eine erfindungsgemäße Schaltungsanordnung entspricht in weiten Teilen dem ersten Ausführungsbeispiel gemäß Fig. 1. Unterschiede finden sich im Wesentlichen in der Art und Weise, wie das Spannungssignal der Spannung über dem Eingangskondensator C10 zu dem ersten Subtrahierer geführt wird. Zwar erfolgt die Rückkopplung auch unter Zwischenschaltung eines Bandpasses, doch wird die Kompensation nicht über Schaltmittel ein- und ausschaltbar gestaltet. Vielmehr ist zwischen dem Bandpass und dem negativen Eingang des ersten Subtrahierers S ein Verstärker eingesetzt, dessen Verstärkung variabel ist. Dieser variable Verstärker ist so angesteuert, dass sich die Verstärkung aus der Differenz zwischen dem Spannungswert entsprechend dem maximalen Primärstrom und dem Grenzwert für den maximalen Primärstrom ergibt. Die Verstärkung ist maximal, wenn die Spannung entsprechend dem maximalen Primärstrom größer oder gleich dem Grenzwert ist. Mit wachsender Differenz zwischen dem Grenzwert und dem maximalen Primärstrom wird die Verstärkung immer geringer, was den Vorteil hat, dass die Gegenkopplung langsam und nicht plötzlich unwirksam wird.

## Patentansprüche

1. Schaltungsanordnung für einen Kraftfahrzeugscheinwerfer mit einer Gasentladungslampe mit folgenden Merkmalen:
- die Schaltungsanordnung umfasst einen Eingang (E) zum Anschließen der Schaltungsanordnung an ein Kraftfahrzeugbordnetz (UB), einen Ausgang (A) zum Anschließen einer Gasentladungslampe (GDL) und einen Gleichstromwandler (C10, Tr10, SW10, D10, C11) der zwischen den Eingang und den Ausgang geschaltet ist
- der Gleichstromwandler (C10, Tr10, SW10, D10, C11) umfasst einen Eingangskondensator (C10),
- die Schaltungsanordnung umfasst ferner Mittel zum Einstellen eines primärseitigen Stroms durch den Gleichstromwandler,
- die Mittel (SW10, PWM, Comp2) zum Einstellen des primärseitigen Stroms umfassen ein Element (Comp2) zum Vergleichen einer ersten Spannung mit einer zweiten Spannung,
- die Mittel (SW10, PWM, Comp2) zum Einstellen des primärseitigen Stroms umfassen ferner ein Stellelement (PWM, SW10) zum Einstellen des primärseitigen Stroms in Abhängigkeit des Ergebnisses des Vergleichs durch das Element (Comp2),
- die Schaltungsanordnung Mittel zum Kompensieren von Schwankungen der Spannung über dem Eingangskondensator (C10) aufweist
**dadurch gekennzeichnet, dass**
- die Mittel zum Kompensieren geeignet und eingerichtet sind,
- entweder die erste Spannung in Abhängigkeit von der Spannung über dem Eingangskondensator (C10) und von einer Spannung entsprechend des primärseitigen Stroms
- oder die zweite Spannung in Abhängigkeit von der Spannung über dem Eingangskondensator (C10) und von einer von einem Regler vorgegebenen Spannung entsprechend einem maximalen primärseitigen Strom
zu erzeugen.

2. Schaltunsanordnung nach Anspruch 1, **dadurch gekennzeichnet, dass** bei Erzeugung der ersten Spannung in Abhängigkeit von der Spannung über dem Eingangskondensator (C10)und von einer Spannung entsprechend des primärseitigen Stroms, die zweite Spannung einer von einem Regler vorgegebenen Spannung entsprechend einem maximalen primärseitigen Strom entspricht.

3. Schaltungsanordnung nach Anspruch 1 oder 2, **dadurch gekennzeichnet, dass** bei Erzeugeing der ersten Spannung in Abhängigkeit von der Spannung über dem Eingangskondensator (C10) und von einer Spannung entsprechend des primärseitigen Stroms, die Mittel zum Kompensieren einen Subtrahierer zur Erzeugung der ersten Spannung aufweisen.

4. Schaltungsanordnung nach Anspruch 3, **dadurch gekennzeichnet, dass** der Subtrahierer zur Erzeugung der ersten Spannung durch Abziehen der Spannung über dem Eingangskondensator (C10) von der Spannung entsprechend des primärseitigen Stroms geeignet und eingerichtet ist.

5. Schaltungsanordnung nach Anspruch 1, **dadurch gekennzeichnet, dass** bei Erzeugung der zweiten Spannung in Abhängigkeit von der Spannung über dem Eingangskondensator (C10) und von einer von einem Regler vorgegebenen Spannung entsprechend einem maximalen primärseitigen Strom die erste Spannung einem primärseitigen Strom entspricht.

6. Schaltungsanordnung nach Anspruch loder 5, **dadurch gekennzeichnet, dass** bei Erzeugung der zweiten Spannung in Abhängigkeit von der Spannung über dem Eingangskondensator (C10) und von einer von einem Regler vorgegebenen Spannung entsprechend einem maximalen primärseitigen Strom die Mittel zum Kompensieren einen Addierer zur Erzeugung der zweiten Spannung aufweisen.

7. Schaltungsanordnung nach Anspruch 6, **dadurch gekennzeichnet, dass** der Addierer zur Erzeugung der zweiten Spannung zum Addieren der Spannung über dem Eingangskondensator (C10) zu der von dem Regler vorgegebenen Spannung eingerichtet und geeignet ist.

8. Schaltungsanordnung nach einem der Ansprüche 2 bis 7, **dadurch gekennzeichnet, dass** die von dem Regler vorgegebene Spannung durch einen Begrenzer (Clip1) zur Erzeugung der zweiten Spannung auf einen vorgegebenen Grenzwert begrenzbar ist.

9. Schaltungsanordnung nach einem der Ansprüche 1 bis 8, **dadurch gekennzeichnet, dass** die Schaltungsanordnung ein Bandpassfilter zum Filtern der zu den Mitteln zum Kompensieren zugeführten Spannung über dem Eingangskondensator (C10) umfassen.

10. Schaltungsanordnung nach Anspruch 9, **dadurch gekennzeichnet, dass** das Bandpassfilter auf Resonanzfrequenzen des Bordnetzes (UB) und/oder eines Eingangsfilters der Schaltungsanordnung und/oder des Eingangskondensators (C10) abgestimmt ist.

11. Schaltungsanordnung nach einem der Ansprüche 1 bis 10, **dadurch gekennzeichnet, dass** die Mittel zum Kompensieren durch Schaltmittel (SW1, Comp1) ein- und abschaltbar sind.

12. Schaltungsanordnung nach Anspruch 11, **dadurch gekennzeichnet, dass** die Schaltmittel (SW1) einen Komparator (Comp1) und ein Schaltelement (SW1) umfassen.

13. Schaltungsanordnung nach Anspruch 12, **dadurch gekennzeichnet, dass** der Komparator (Comp1) zum Vergleichen der von dem Regler vorgegebenen Spannung mit dem Grenzwert für die zweite Spannung geeignet und eingerichtet ist.

14. Schaltungsanordnung nach Anspruch 13, **dadurch gekennzeichnet, dass** in Abhängigkeit des Vergleichs des Komparators (Comp1) das Schaltelement (SW1) zum Ein- bzw. Ausschalten der Mittel zum Kompensieren aktivierbar ist.

15. Schaltungsanordnung nach Anspruch 14, **dadurch gekennzeichnet, dass** das Schaltelement (SW1) zum Einschalten der Mittel zum Kompensieren aktivierbar ist, wenn die von dem Regler vorgegebene Spannung 30 bis 100%, insbesondere 55% des Grenzwerts beträgt.

16. Schaltungsanordnung nach Anspruch 2, **dadurch gekennzeichnet, dass** der Subtrahierer zur Erzeugung der ersten Spannung durch Abziehen der Spannung über dem Eingangskondensator von der Spannung entsprechend des primärseitigen Stroms geeignet und eingerichtet ist, wobei zwischen einem Abgriff der Spannung über dem Eingangskondensator und dem Subtrahierer ein Verstärker geschaltet ist.

17. Schaltungsanordnung nach Anspruch 6, **dadurch gekennzeichnet, dass** der Addierer zur Erzeugung der zweiten Spannung durch Addieren der Spannung über dem Eingangskondensator (C10) der vom Regler vorgegebenen Spannung geeignet und eingerichtet ist, wobei zwischen einem Abgriff über dem Eingangskondensator (C10) und dem Addierer ein Verstärker geschaltet ist.

18. Schaltungsanordnung nach Anspruch 16 oder 17, **dadurch gekennzeichnet, dass** der Verstärker einen variablen Verstärkungsfaktor hat.

19. Schaltungsanordnung nach Anspruch 18, **dadurch gekennzeichnet, dass** Mittel zum Einstellen des Verstärkungsfaktors in Abhängigkeit einer Differenz zwischen der von dem Regler vorgegebenen Spannung und dem Grenzwert aufweist.

## Claims

1. Circuit arrangement for a headlamp for vehicles, wherein said headlamp comprises a gas discharge lamp and said circuit arrangement has the following features:
- the circuit arrangement comprises an input (E) for connecting the circuit arrangement to the on-board mains of a vehicle (UB), an output (A) for connecting a gas discharge lamp (GDL) and a direct current converter (C10, Tr10, SW10, D10, C11) placed in the circuit between the input and the output;
- the direct current converter (C10, Tr10, SW10, D10, C11) comprises an input capacitor (C10);
- the circuit arrangement further comprises devices for tuning a primary current through the direct current converter;
- said devices (SW10, PWM, Comp2) for tuning a primary current comprise an element (Comp2) for comparing a first voltage with a second voltage;
- said devices (SW10, PWM, Comp2) for tuning a primary current further comprise an actuator element (PWM, SW10) for tuning the primary current depending on the result of the comparison made by the element (Comp2);
- the circuit arrangement comprises devices for balancing variations in the voltage to the input capacitor (C10);
**characterized in that**
- said balancing devices are designed and set up to generate
- either the first voltage subject to the voltage to the input capacitor (C10) and further subject to a voltage equivalent to the primary current
- or the second voltage subject to the voltage to the input capacitor (C10) and further subject to a voltage set by a controller with reference to a maximum primary current.

2. Circuit arrangement of claim 1, **characterized in that**, when generating the first voltage subject to the voltage to the input capacitor (C10) and further subject to a voltage equivalent to the primary current, the second voltage is equivalent to a voltage set by a controller with reference to a maximum primary current.

3. Circuit arrangement of claim 1 or 2, **characterized in that**, when generating the first voltage subject to the voltage to the input capacitor (C10) and further subject to a voltage equivalent to the primary current, the balancing devices comprise a subtractor for generating the first voltage.

4. Circuit arrangement of claim 3, **characterized in that** the subtractor is designed and set up to generate the first voltage by subtracting the voltage to the input capacitor (C10) from the voltage equivalent to the primary current.

5. Circuit arrangement of claim 1, **characterized in that**, when generating the second voltage subject to the voltage to the input capacitor (C10) and further subject to a voltage set by a controller with reference to a maximum primary current, the first voltage is equivalent to a primary current.

6. Circuit arrangement of claim 1 or 5, **characterized in that**, when generating the second voltage subject to the voltage to the input capacitor (C10) and further subject to a voltage set by a controller with reference to a maximum primary current, the balancing devices comprise an adder for generating the second voltage.

7. Circuit arrangement of claim 6, **characterized in that** the adder is designed and set up to generate the second voltage by adding the voltage to the input capacitor (C10) to the voltage set by the controller.

8. Circuit arrangement of claims 2 to 7, **characterized in that** a clipper (Clip1) is provided such that the voltage set by the controller to generate the second voltage is clipped at a set limit.

9. Circuit arrangement of claims 1 to 8, **characterized in that** said circuit arrangement comprises a band-pass filter for filtering the voltage to the input capacitor (C10) fed to the balancing devices.

10. Circuit arrangement of claim 9, **characterized in that** the band-pass filter is adjusted to resonant frequencies of the on-board mains (UB) and/or the input filter of the circuit arrangement and/or the input capacitor (C10).

11. Circuit arrangement of claims 1 to 10, **characterized in that** the balancing devices can be turned on and off by switching members (SW1, Comp1).

12. Circuit arrangement of claim 11, **characterized in that** the switching members (SW1) comprise a comparator (Comp1) and a switching element (SW1).

13. Circuit arrangement of claim 12, **characterized in that** the comparator (Comp1) is designed and set up to compare the voltage set by the controller to the limit set for the second voltage.

14. Circuit arrangement of claim 13, **characterized in that** the switching element (SW1) for turning on or off the balancing devices is actuated subject to the comparison performed by the comparator (Comp1).

15. Circuit arrangement of claim 14, **characterized in that** the switching element (SW1) for turning on the balancing devices can be actuated if the voltage set by the controller is within 30% to 100%, particularly 55%, of the voltage limit.

16. Circuit arrangement of claim 2, **characterized in that** the subtractor is designed and set up to generate the first voltage by subtracting the voltage to the input capacitor from the voltage equivalent to the primary current, wherein an amplifier resides in the circuit between a tap for the voltage to the input capacitor and the subtractor.

17. Circuit arrangement of claim 6, **characterized in that** the adder is designed and set up to generate the second voltage by adding the voltage to the input capacitor (C10) to the voltage set by the controller, wherein an amplifier resides in the circuit between a tap for the voltage to the input capacitor (C10) and the adder.

18. Circuit arrangement of claim 16 or 17, **characterized in that** the amplification factor of the amplifier is variable.

19. Circuit arrangement of claim 18, **characterized in that** the means of setting the amplification factor subject to a voltage comprises a difference between the voltage set by the controller and the voltage limit.

## Revendications

1. Disposition des circuits d'un projecteur de véhicule avec une lampe à décharge présentant les caractéristiques suivantes :
- la disposition des circuits comprend une entrée (E) pour le raccordement des circuits sur un réseau embarqué de véhicule (UB), une sortie (A) pour le raccordement d'une lampe à décharge (GDL) et un convertisseur de courant continu (C10, Tr10, SW10, D10, C11) qui est connecté entre l'entrée et la sortie,
- le convertisseur de courant continu (C10, Tr10, SW10, D10, C11) comprend un condensateur d'entrée (C10),
- la disposition des circuits comprend d'autre part des moyens pour le réglage d'un courant côté primaire par le convertisseur de courant continu,
- les moyens (SW10, PWM, Comp2) pour le réglage du courant côté primaire comprennent un élément (Comp2) pour comparer une première tension avec une deuxième tension,
- les moyens (SW10, PWM, Comp2) pour le réglage du courant côté primaire comprennent d'autre part un élément de réglage (PWM, SW10) pour le réglage du courant côté primaire en fonction du résultat de la comparaison par l'élément (Comp2),
- la disposition des circuits présente des moyens pour la compensation des fluctuations de la tension par le condensateur d'entrée (C10),
**caractérisé en ce que**
- les moyens pour la compensation sont appropriés et conçus pour générer
- soit la première tension en fonction de la tension par le condensateur d'entrée (C10) et d'une tension selon le courant côté primaire
- ou la deuxième tension en fonction de la tension par le condensateur d'entrée (C10) et d'une tension prédonnée par un régulateur selon un courant maximal côté primaire.

2. Disposition de circuits selon la revendication 1, **caractérisée en ce que**, lors de la production de la première tension en fonction de la tension par le condensateur d'entrée (C10) et d'une deuxième tension selon le courant côté primaire, la deuxième tension correspond à une tension prédonnée par un régulateur selon un courant maximal côté primaire.

3. Disposition de circuits selon la revendication 1 ou 2, **caractérisée en ce que** lors de la production de la première tension en fonction de la tension par le condensateur d'entrée (C10) et d'une tension selon le courant côté primaire, les moyens pour la compensation présentent un soustracteur pour la génération de la première tension.

4. Disposition de circuits selon la revendication 3, **caractérisée en ce que** le soustracteur est adapté et conçu pour générer la première tension en déduisant la tension par le condensateur d'entrée (C10) de la tension conformément au courant côté primaire.

5. Disposition de circuits selon la revendication 1, **caractérisée en ce que**, lors de la production de la deuxième tension en fonction de la tension par le condensateur d'entrée (C10) et d'une tension prédonnée par un régulateur, selon un courant côté primaire maximal, la première tension correspond à un courant côté primaire.

6. Disposition de circuits selon la revendication 1 ou 5, **caractérisée en ce que**, lors de la production de la deuxième tension en fonction de la tension par le condensateur d'entrée (C10) et d'une tension prédonnée par un régulateur conformément à un courant maximal côté primaire, les moyens pour la compensation présentent un additionneur pour la production de la deuxième tension.

7. Disposition de circuits selon la revendication 6, **caractérisée en ce que** l'additionneur pour la génération de la deuxième tension est adapté et conçu pour l'addition de la tension par le condensateur d'entrée (C10) à la tension prédonnée par le régulateur.

8. Disposition de circuits selon l'une des revendications 2 à 7, **caractérisée en ce que** la tension prédonnée par le régulateur peut être limitée à une valeur limite prédonnée par un limiteur (Clip1) pour la production de la deuxième tension.

9. Disposition de circuits selon l'une des revendications 1 à 8, **caractérisée en ce que** la disposition du circuit comprend un filtre passe-bande pour filtrer la tension dirigée vers les moyens de compensation par le condensateur d'entrée (C10).

10. Disposition de circuits selon la revendication 9, **caractérisée en ce que** le filtre passe-bande est adapté aux fréquences de résonance du réseau embarqué (UB) et/ou d'un filtre d'entrée de la disposition du circuit et/ou du condensateur d'entrée (C10).

11. Disposition de circuits selon l'une des revendications 1 à 10, **caractérisée en ce que** les moyens de compensation peuvent être mis en et hors service par les moyens de commutation (SW1, Comp1).

12. Disposition de circuits selon la revendication 11, **caractérisée en ce que** les moyens de commutation (SW1) comprennent un comparateur (Comp1) et un élément de commutation (SW1).

13. Disposition de circuits selon la revendication 12, **caractérisée en ce que** le comparateur (Comp1) est adapté et conçu pour la comparaison de la tension prédonnée par le régulateur avec la valeur limite pour la deuxième tension.

14. Disposition de circuits selon la revendication 13, **caractérisée en ce que**, en fonction de la comparaison du comparateur (Comp1), l'élément de commutation (SW1) servant à la mise en ou hors service des moyens de compensation peut être activé.

15. Disposition de circuits selon la revendication 14, **caractérisée en ce que** l'élément de commutation (SW1) peut être activé pour la mise en service des moyens pour la compensation lorsque la tension prédonnée par le régulateur s'élève à 30 à 100 %, notamment à 55 % de la valeur limite.

16. Disposition de circuits selon la revendication 2, **caractérisée en ce que** le soustracteur est adapté et conçu pour générer la première tension en soustrayant la tension par le condensateur d'entrée de la tension conformément au courant côté primaire, un amplificateur étant connecté entre la prise de la tension par le condensateur d'entrée et le soustracteur.

17. Disposition de circuits selon la revendication 6, **caractérisée en ce que** l'additionneur pour la génération de la deuxième tension est adapté et conçu pour l'addition de la tension par le condensateur d'entrée (C10) à la tension prédonnée par le régulateur, un amplificateur étant connecté entre une prise par le condensateur d'entrée et l'additionneur.

18. Disposition de circuits selon la revendication 16 ou 17, **caractérisée en ce que** l'amplificateur a un facteur d'amplification variable.

19. Disposition de circuits selon la revendication 18, **caractérisée en ce que** le moyen destiné au réglage du facteur d'amplification en fonction d'une tension présente une différence entre la tension prédonnée par le régulateur et la valeur limite.
